# EUROPEAN PATENT APPLICATION

(11) **EP 3 978 681 A1**
(43) Date of publication of application: **06.04.2022**
(21) Application number: 20819232.8
(22) Date of filing: 01.06.2020
(51) Int. Cl.: D21C 11/00, C07G 1/00

(54) **PROCESSES FOR EXTRACTING LIGNIN FROM BLACK LIQUOR**

(30) Priority: 03.06.2019 BR 102019011474
(71) Applicant: Suzano S.A., 41810-012 Pituba, Salvador, BA (BR)
(72) Inventor: BOHRER LOBOSCO GONZAGA DE OLIVEIRA, Vinícius, 13465-770 Americana, SP (BR); POSSA BORGES FRANCO, Lucas, 13465-540 Americanas, SP (BR)
(74) Representative: Gerbino, Angelo
(86) International application number: PCT/BR2020/050196
(87) International publication number: WO 2020/243805

(57) **Abstract**

The present invention relates to processes for extracting lignin from black liquor. In particular, processes for both extracting acidic lignin and extracting alkaline lignin from black liquor are disclosed, comprising: precipitating lignin by acidification of black liquor; adjusting the temperature to above 60°C; cooling; separation; and displacement washing and/or washing by ion exchange.

## Description

### FIELD OF THE INVENTION

The present invention relates to processes for extracting lignin from black liquor. In particular, disclosed are processes for extracting both acidic lignin and alkaline lignin from black liquor, comprising: precipitating lignin by acidifying black liquor; adjusting the temperature to above 60°C; cooling; separation; and displacement washing and/or ion exchange washing.

### BACKGROUND OF THE INVENTION

The demand for environmental sustainability and, consequently, for materials from renewable and/or biodegradable sources has increased at a very significant rate in recent years.

In this context, the pulp and paper industry has a great opportunity as a supplier of renewable raw materials at economically viable rates. There has been a remarkable transformation in this type of industry for forest-based companies, which seek to add maximum value to their forests by seizing opportunities arising from environmental pressures and the needs of changing markets.

An example of this transformation is the case of lignin, which is one of the components of biomass and, in the past, was essentially treated as a byproduct obtained during the extraction of cellulose, being burned for energy generation in the pulp and paper industries. Currently, it has been valorized, recovered and converted into products with great potential for replacing raw materials from fossil sources, or even into products for new scenarios and applications.

In this context, the extraction of lignin from black liquor has been used to supply lignin for commercial use, for example, for use as a biofuel or for the production of "green chemicals". Thus, currently there are several and different processes for separating and precipitating lignin from black liquor.

A method for separating lignin from black liquor is described, for example, in patent document PI 0924867-6. In said method, the waste gases from a second acidification stage are recirculated and mixed with the original black liquor, at the latest in a first acidification stage. In the processes of the present invention, due to the use of smaller amounts of acidic chemicals, which are reacted with lignin, there is low gas evolution in the second acidification stage. These waste gases from the second acidification stage are not reused; they are captured, treated and directed to a boiler for burning.

Another document which discloses a method for separating lignin from a lignin-containing liquid or slurry, such as black liquor, is described, for example, in patent document PI 0517543-7. This method comprises the steps of: (a) adding one or more compounds comprising sulfate and/or sulfate ions, to said liquid or slurry; (b) adjusting the pH level of said liquid or slurry by acidification, where the pH level is adjusted using CO₂; and (c) dehydrating said liquid or slurry, whereby a lignin product is obtained. According to the patent, one or more compounds comprising sulfate and/or sulfate ions is (are) added during step (a) of the method to increase the ionic strength in the black liquor and thus be able to precipitate with a lower acid consumption or, alternatively, obtain a higher lignin precipitation with the same amount of added acid. With the processes disclosed in the present invention, on the other hand, it is possible to extract lignin from black liquor with a good yield and without the need to add one or more compounds comprising sulfate and/or sulfate ions to the black liquor.

Document WO 2006/031175, in turn, discloses a two-stage acidic process for separating lignin from black liquor, known as LignoBoost^{®}. Such document discloses a method for separating lignin from black liquor comprising the steps of: (a) precipitating lignin by acidifying black liquor and thereupon dehydration; (b) suspending the lignin filter cake obtained in step (a), to obtain a second lignin suspension and adjusting the pH level to approximately that of the washing water of step (d); (c) dewatering of the second lignin suspension; (d) adding washing water and performing a displacement washing under substantially constant conditions without any dramatic gradients in the pH; and (e) dewatering of the lignin cake produced in step (d) into a high dryness and displacing the remaining washing liquid in said filter cake, whereby a lignin product is obtained which has an even higher dryness after the displacement washing of step (e).

The processes of the present invention comprise temperature variations during and/or after precipitation and washing steps soon after dehydration, so that such steps provide a significant improvement in the separation of lignin, which makes resuspension unnecessary and optional in the processes of the present invention, as will be presented below, while it is necessary in the process of the cited document.

Furthermore, the process known as LignoBoost^{®} provides acidic lignin, while the present invention provides process flexibility. By adjusting the processes of the present invention, it is possible to obtain acidic lignin or alkaline lignin. The processes of the present invention also have other advantages over the LignoBoost^{®} process, namely: the possibility of washing in a single step (obtaining an alkaline lignin) and the possibility of pH fractionation, according to the need of the desired product.

Another example of a document related to the process of obtaining lignin from black liquor is WO 2016/105259. The invention disclosed in said document focuses on a method of producing lignin with reduced amount of odorous substances. This method comprises the steps of dissolving a lignin already isolated from the black liquor in an alkaline solution, followed by the addition of a C₁-C₄ alcohol and lignin reprecipitation. The processes of the present invention, in turn, do not include the use of an alcohol in any of its steps. Deodorization can be performed in the processes of the present invention, if desired, concurrently with the acidification and precipitation of the lignin, through black liquor oxidation. Furthermore, the deodorization treatment in the processes of the present invention refers to the deodorization of the process by minimizing bad odor in the factory environment. However, as mentioned above, the present invention provides an alternative process for extracting lignin from black liquor, which provides a significant improvement in lignin separation, even without resuspension.

Although methods for separating lignin from black liquor already exist in the state of the art, there is a current need for alternative processes that are less expensive and more environmentally friendly. Also, among the problems of the current processes for separating lignin from black liquor, it can be cited: the emission of sulfur compounds during different stages of the process; large amount of acidifying agents needed; the need to dispose of sulfate salts in landfills, which are generated by the high sulfuric acid consumption; filtration capacity that requires large separation equipment and, as a result, large investments; factory environments with bad odors due to the odors from the lignin extraction processes; and the flexibility to obtain different products: alkaline lignin and acidic lignin. The processes disclosed in the present invention are capable of solving all these technical problems in a single, less expensive and more environmentally friendly process.

### SUMMARY OF THE INVENTION

The present invention relates to processes for extracting lignin from black liquor. In particular, it refers to processes for extracting both acidic lignin and alkaline lignin from black liquor.

Described herein are processes for extracting lignin from black liquor comprising the steps of:
a) precipitating lignin by acidifying black liquor;
b) adjusting the temperature to above 60°C;
c) cooling;
d) separation; and
e) displacement washing and ion exchange washing.

Also described herein are processes for extracting lignin from black liquor comprising the steps of:
a) precipitating lignin by acidifying black liquor;
b) adjusting the temperature to above 60°C;
c) cooling;
d) separation; and
e) ion exchange washing.

Additionally described herein are processes for extracting lignin from black liquor comprising the steps of:
a) precipitating lignin by acidifying black liquor;
b) adjusting the temperature to above 60°C;
c) cooling;
d) separation; and
e) displacement washing.

In one embodiment of the invention, (i) the displacement washings are performed with salt solution; and (ii) the ion exchange washings are performed with water with addition of acid.

The salt solution may comprise any salts, preferably sodium salts, such as, for example, sodium sulfate, sodium sesquisulfate, sodium carbonate and sodium bicarbonate.

The salt solution used in the displacement washings has a conductivity greater than 30 mS/cm, preferably greater than 80 mS/cm.

Ion exchange washings are performed with recovered water with an acid-adjusted pH below 1.5. Said acid may be selected from the group consisting of strong acids having a pH below 1.5. Preferably, the acid added to the water in the ion exchange washing is sulfuric acid.

In one embodiment of the invention, after displacement washing and/or ion exchange washing, final washing is still performed, preferably, with industrial water.

In one embodiment of the invention, the black liquor is acidified in step (a) to a pH of less than 11.5, preferably to a pH in the range of 2.5 to 11.5.

In one embodiment of the invention, step (a) of precipitation by acidifying black liquor is performed with an acidifier selected from inorganic acids, organic acids or acidic oxides, or with a solution comprising said acidifier.

Non-limiting examples of inorganic acids may be selected from the group consisting of sulfuric acid and hydrochloric acid.

Non-limiting examples of organic acids may be selected from the group consisting of acetic acid and formic acid.

Non-limiting examples of acidic oxides may be selected from the group consisting of CO₂, SO₂ and SO₃.

In a preferred embodiment of the invention, step (a) of precipitation by acidifying black liquor is performed with an acid oxide. In a more preferred embodiment, the acid oxide is CO₂.

In an optional embodiment of the invention, the lignin extraction processes further comprise black liquor oxidation concurrently with step (a) of precipitation by acidification. In the optional oxidation step, the H₂S is oxidized to a thiosulfate or a sulfate.

In one embodiment of the invention, before or after step (a) of the lignin extraction processes, cellulose fibers remaining in the black liquor resulting from the kraft process cooking are optionally separated by a separation process selected from: filtration, centrifugation or decantation.

In a preferred embodiment of the invention, the temperature adjustment of step (b) ranges from 60°C to 200°C.

In one embodiment of the invention, the temperature adjusted in step (b) is maintained for any time interval, preferably for a time interval longer than 2 minutes, more preferably for a time interval of between 10 minutes and 24 hours.

In one embodiment of the invention, steps (a) and (b) of the processes described herein are performed concurrently.

In one embodiment of the invention, in step (c) of the lignin extraction processes the black liquor is cooled to a temperature below 50°C.

In one embodiment of the invention, separation step (d) is a solid-liquid type separation. In a preferred embodiment, the solid-liquid type separation is performed by means of filters, settlers, decanters or centrifuges. In a more preferred embodiment, separation step (d) is performed by filtration.

In one embodiment of the invention, separation step (d) is performed at a temperature below 50°C, preferably below 40°C.

In one embodiment of the invention, after separation step (d), the solid phase goes to washing step (e) and the liquid phase is directed to evaporation.

In another embodiment of the invention, the lignin extraction processes comprise, after separation step (d), a pH fractionation. Said fractionation can be performed whenever the liquid phase of step (d) - filtered, in the case where the separation is made by filtration - is directed to step (a) and precipitated again at a lower pH.

In one embodiment of the invention, the washing performed in step (e) can be in suspension or countercurrent to the solid phase obtained in step (d). In a preferred embodiment, the washing performed in step (e) is countercurrent to the solid phase obtained in step (d).

In one embodiment of the invention, the lignin extraction processes further comprise step (f) of resuspending the solid phase. In a preferred embodiment of the invention, step (f) is performed in water with later addition of acid, or in an acidic solution. The water used in the resuspension is directed to the final washing of the first cake obtained from the first filtration.

In one embodiment of the invention, resuspension step (f) further comprises filtering and, optionally, washing with industrial water.

In one embodiment of the invention, the lignin extraction processes further comprise a dehydration step after washing step (e) and/or after resuspension step (f). Preferably, dehydration is performed by pressing, dewatering with compressed air and/or drying with a dryer.

The gases emitted from tanks containing black liquor from the processes and/or emitted from the first acid washing are captured, treated and reused in the process. Treated gases are reused in the process as energy and/or as chemical for the process.

The lignin extraction processes of the present invention can take place continuously or in batches. In a preferred embodiment of the invention, the processes take place in batches.

The waters used in the countercurrent washes of the lignin extraction processes of the present invention are reused in the processes themselves. Countercurrent washing waters can be reused, for example, in the previous washing or in the optional resuspension step. After reuse, the washing waters proceed to evaporation or effluent treatment.

### DEFINITIONS

The definitions of some terms/expressions used in the present invention are now presented, namely, black liquor, kraft process and lignin.

Black liquor is the spent cooking liquor from the Kraft process when digesting wood into pulp, removing lignin, hemicelluloses and other extractives from the wood to release the cellulose fibers.

Black liquor contains more than half the energy content of the wood fed into the digester. Typically, black liquor is concentrated to 65-80% via evaporators and burned in a recovery boiler to produce energy and recover cooking chemicals.

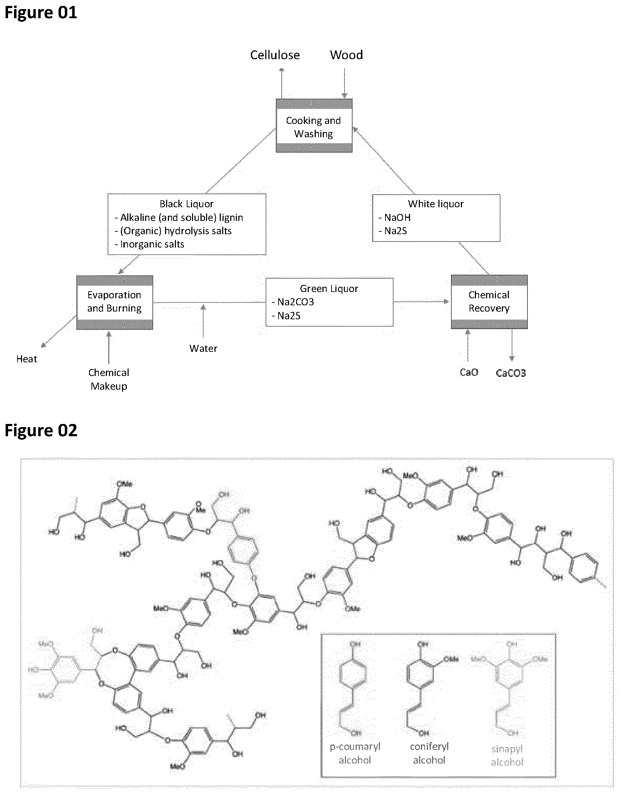

In the kraft process, the white liquor comprising the active chemicals (NaOH and Na₂S) is used in wood cooking. The residual liquor, called black liquor, which contains the reaction products of the lignin solubilization, is concentrated and burned in the recovery boiler generating a Na₂CO₃ and Na₂S melt. Such melt is solubilized to generate green liquor which reacts with lime to convert Na₂CO₃ into NaOH, regenerating the original white liquor. A simplified version of the kraft process can be seen in figure 01.

Finally, lignin can be technically defined as an amorphous material derived from dehydrogenative reactions of three types of phenylpropanoids: trans-coniferyl (G-type), trans-sinapyl (S-type) and trans-p-coumaryl alcohols (type-H), which can be bound in different ways by covalent bonds, without a repetitive unit (characteristic of polymers), but rather a complex arrangement of such precursor units that generate macromolecules.

Like all natural matter, lignin presents substantial differences in its composition, structure and purity, which affect its properties and, as a result, its application potential. Such variations depend on the botanical origin, since the ratio of generating units (H/G/S) changes according to plant type. For example, this ratio is 0-5 / 95-100 / 0 in softwoods, 0-8 / 25-50 / 46-75 in hardwoods and 5-33 / 33-80 / 20-54 in grasses.

As can be seen, lignin has a very complex chemical structure. There are models that try to describe it, but there is no full definition. Figure 02 shows a supposed formula for it.

### BRIEF DESCRIPTION OF THE DRAWINGS

Figure 01 shows a simplified version of the kraft process.
Figure 02 shows the supposed generic chemical structure for lignin.
Figures 03 and 04 show microscopy images of lignin granules.
Figure 05 shows a comparison between the final qualities, indicated by the ash contents, of a resuspended cake that underwent alkaline washing and a second resuspended cake that did not undergo alkaline washing.
Figure 06 shows a comparison between lignin extraction efficiencies in a process that comprises alkaline washing and a second process that does not comprise washing.
Figure 07 shows the influence of temperature on the ash content.
Figure 08 shows a comparison between the specific consumption of sulfuric acid in a process that comprises washing with salt solution and a second process that does not include washing.
Figure 09 is a graph illustrating the lignin precipitation efficiency as a function of pH.
Figure 10 shows a simplified scheme of a preferred embodiment of the lignin extraction process according to the present invention.

### DETAILED DESCRIPTION OF THE INVENTION

The present invention relates to processes for extracting lignin from black liquor. Specifically, the present invention relates to processes for extracting acidic lignin from black liquor and processes for extracting alkaline lignin from black liquor, with modifications only in the washing step.

The present invention has the advantage of flexibility to obtain different products: alkaline lignin and acidic lignin. The alkaline lignin obtained by the processes of the present invention has great advantages for applications in resole resins.

The lignin extraction processes of the present invention can take place continuously or in batches. Preferably, the processes take place in batches.

The black liquor used in the processes described in the present invention is pumpable as it has a solids content of 15% to 50%.

The processes disclosed herein differ from those described in the state of the art mainly by the formation of lignin granules resulting from specific temperature variations performed at the beginning of the processes and by the strategy adopted in the washing step, which provides flexibility in obtaining different types of lignin.

At the beginning of the processes, there is a temperature control in the sense that, during or after precipitation, the temperature is adjusted to 60°C or above and then there is a temperature decrease. This temperature variation induces the formation of lignin granules, which result in a significant improvement in the subsequent separation step, as well as an easier washing.

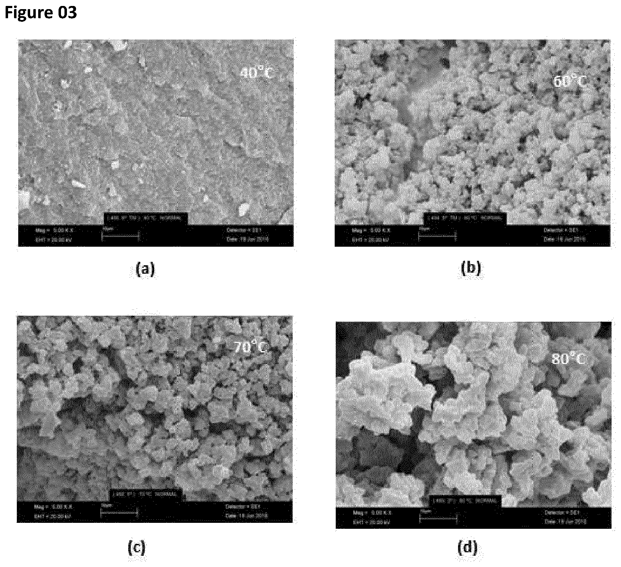

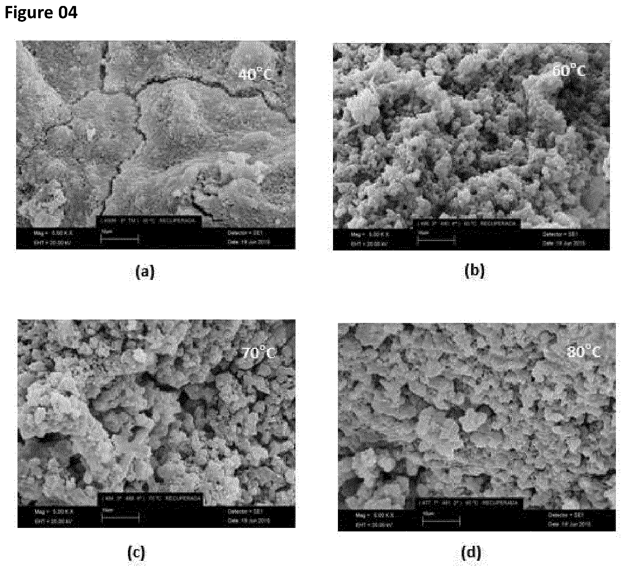

Microscopy images of the granules formed due to temperature variation at the beginning of the processes of the present invention can be seen in figures 03 and 04. In figure 03, the granules are those contained in the first cake, i.e., in the first filtration. Figure 04, by its turn, shows the granules when the resuspension step occurs in the process, these granules being formed due to temperature variation at the beginning of the processes.

Figures 03 (a) and 04 (a) show granules formed at 40°C; figures 03 (b) and 04 (b) show granules formed at 60°C; figures 03 (c) and 04 (c) show granules formed at 70°C; and figures 03 (d) and 04 (d) show granules formed at 80°C.

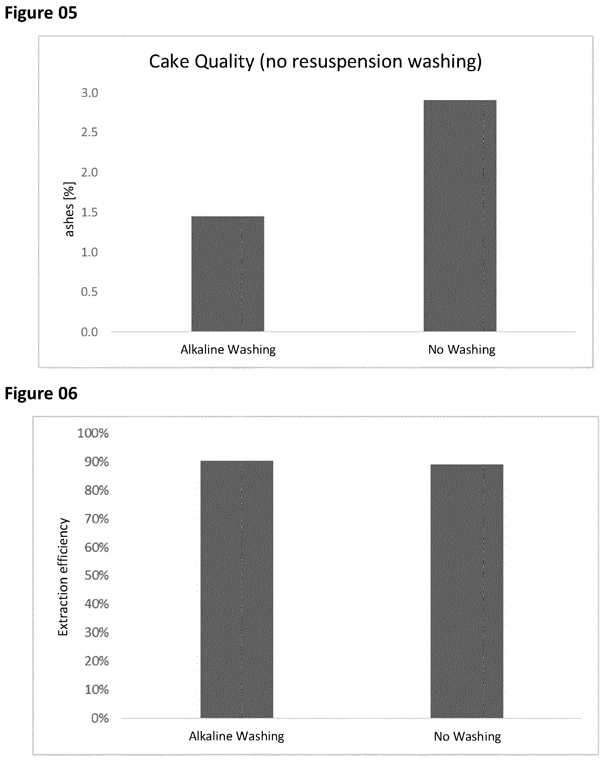

The washing steps of the processes described herein comprise specific washing stages that result in advantages such as improving the quality of the lignin cake, which has a reduced ash content, and an improvement in the lignin extraction efficiency. These advantages are exemplified in figures 05 and 06, respectively. These figures indicate the influence of alkaline washing in the first stage, i.e., right after the separation step. The alkaline washing, as mentioned in figures 05 and 06, refers to a wash with a salt solution.

In particular, figure 05 shows a comparison between the final qualities, indicated by the ash contents, of a cake that underwent alkaline washing in the first stage (right after the separation step) and a second cake that did not undergo any washing. Both cakes did not undergo washing of the second cake (after resuspension). This figure illustrates one of the technical advantages of the present invention, namely, a better final quality of the lignin cake due to the washing step.

Figure 06, by its turn, shows a comparison between the lignin extraction efficiencies in a process that comprises alkaline washing in the first stage (right after the separation step) and a second process that does not comprise washing. Extraction efficiency is measured in the lignin fraction extracted from the first cake. As there is no washing of the lignin in the second process (right column in the figure - "no wash") and washing takes place in the first process (left column in the figure - "alkaline wash"), it was expected that there would be loss of material in the first process, with alkaline washing. However, when washing was performed in the processes of the present invention, it was observed that the extraction efficiency is not impaired, which represents a surprising effect of the present invention. The difference between the two columns in figure 06 is not significant, yet the indicated behavior was not expected, since less efficiency was expected when washing the lignin, and this was not demonstrated.

Figure 06 thus illustrates one of the technical advantages of the present invention, namely, improvement in the lignin extraction efficiency due to the washing step.

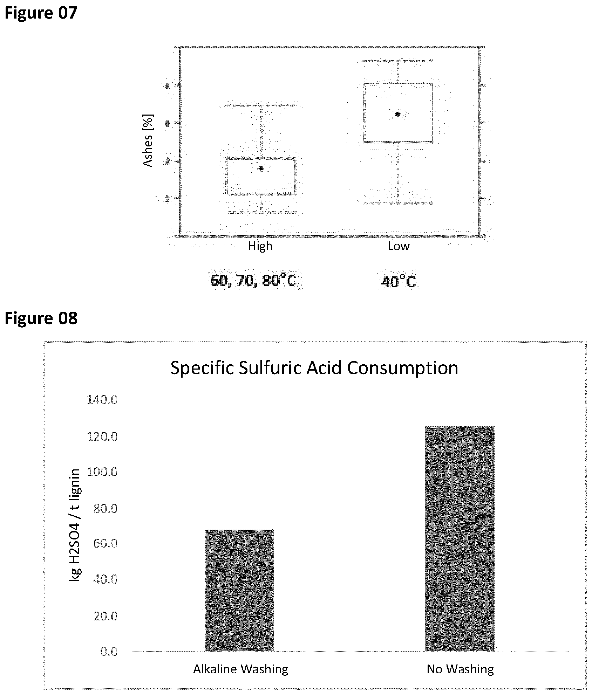

Regarding the ease of washing resulting from the temperature adjustment, a statistical study was performed on the influence of temperature on the ash content. The result of that study is shown in figure 07. The decrease in the ash percentage, observed at higher temperatures, demonstrates improved cake washability. The less ash, the easier or more effective the washing. Thus, the increase in temperature that takes place at the beginning of the processes of the present invention facilitates the washing step.

Described herein are processes for extracting lignin from black liquor comprising the steps of:
a) precipitating lignin by acidifying black liquor;
b) adjusting the temperature to above 60°C;
c) cooling;
d) separation; and
e) displacement washing and ion exchange washing.

Such processes refer to processes for extracting acidic lignin from black liquor. The lignin that precipitates from the black liquor is alkaline and in displacement washing it remains alkaline. When there is ion exchange washing (acid washing), the lignin becomes acidic.

Also described herein are processes for extracting lignin from black liquor comprising the steps of:
a) precipitating lignin by acidifying black liquor;
b) adjusting the temperature to above 60°C;
c) cooling;
d) separation; and
e) ion exchange washing.

Such processes refer to processes for extracting acidic lignin from black liquor. The lignin that precipitates from the black liquor is alkaline, and when ion exchange washing (acid washing) takes place, the lignin becomes acidic.

Additionally described herein are processes for extracting lignin from black liquor comprising the steps of:
a) precipitating lignin by acidifying black liquor;
b) adjusting the temperature to above 60°C;
c) cooling;
d) separation; and
e) displacement washing.

Such processes refer to processes for extracting alkaline lignin from black liquor. The lignin that precipitates from the black liquor is alkaline and in displacement washing it remains alkaline.

In one embodiment of the invention, (i) the displacement washings are performed with salt solution; and (ii) the ion exchange washings are performed with water with addition of acid.

The salt solution may comprise any salts, preferably sodium salts, such as, for example, sodium sulfate, sodium sesquisulfate, sodium carbonate and sodium bicarbonate. Sodium sesquisulfate, when used, comes from a chlorine dioxide plant, and/or salts from the boiler's electrostatic precipitator. The latter refer to a mixture consisting mainly of sulfate, carbonate and sodium chloride.

The salt solution used in the displacement washings has a conductivity greater than 30 mS/cm, preferably greater than 80 mS/cm.

The use of salts in the processes of the present invention represents an economic advantage of lignin extraction processes, since the salts already used in the kraft process are used, whereby costs with this product can be saved.

Displacement washing allows the filtrate present in between the cake to be displaced before placing acid, preferably sulfuric acid, in contact with the lignin. The filtrate has a much higher alkalinity than lignin and therefore consumes more acid. The salt solution is able to displace the filtrate solubilizing only a small amount of lignin. Furthermore, the salt solution has no alkalinity and therefore the addition of acid after the salt solution only displaces the solution without consuming acid.

Thus, displacement washing with salt solution reduces the amount of acid needed in the next ion exchange washing, solving the problem existing in current processes related to the large amount of acidifying agents needed. Figure 08 illustrates the influence on the specific consumption of sulfuric acid caused by washing with a salt solution in the first stage (right after the separation step).

Due to displacement washing, the amount of acid that is included in the processes is spent only with the lignin present in the solution and not with other compounds, so that it is possible to save the amount of acidic products of the process.

Lignin itself requires a small amount of acid to make its ion exchange (by measurements of carboxylic groups, around 20 to 30 kg of H₂SO₄). Most of the acid in the prior art processes is spent with the filtrate where the lignin is immersed. The acid in contact with the filtrate releases CO₂ and H₂S and is also spent with buffer compounds present in the filtrate.

With the displacement of the filtrate in the processes of the present invention, the lignin immersed in sulfate solution is obtained. The subsequent addition of acid only makes the ion exchange with lignin, since there are no carbonate, sulfide or buffer molecules in the washing water.

Thus, the alkaline wash (by displacement) allows the filtrate to be separated from the lignin cake. A solution with high ionic strength is used, but does not consume acid, for example, Na₂SO₄. Washing is performed prior to the protonation of the phenolic and carboxylic groups, which allows the acid not to be spent with ions present in the filtrate.

Also, in displacement washing there is no exhalation of H₂S and CO₂ gases nor protonation of buffer molecules present in the filtrate. The displacement still allows for greater purity, as these and other compounds present in the filtrate will not be present in the final alkaline cake.

Due to the technical advance in carrying out the initial washing by displacement, parallel reactions with other compounds are avoided, which leads to a decrease in the amount of acid used and the amount of gases generated is very low, there being therefore no advantages in reusing them in the processes of the present invention. Otherwise, when there is excess acid, as in prior art processes, more gases are generated, and more reactions are triggered.

In addition, the low amount of acid used in the processes disclosed herein minimizes the need for disposing of sulfate-containing salts in landfills, which represents a technical and environmental advantage. This advantage solves the problem that currently exists regarding the need to dispose of sulfate salts in landfills, generated by the high sulfuric acid consumption. Existing prior art lignin extraction processes that use too much acid necessarily generate too many sulfate salts that need to be disposed of in landfills.

Ion exchange washings are performed with recovered water with an acid-adjusted pH below 1.5. Said acid may be selected from the group consisting of strong acids having a pH below 1.5. Preferably, the acid added to the water in the ion exchange washing is sulfuric acid.

In the acidic lignin extraction process comprising ion exchange washing and final washing it can occur, for example, (i) a first washing with water recovered mainly from a second washing and with pH adjusted with H₂SO₄, acid filtrate from a chlorine dioxide plant or other acid source, to less than 1.0, preferably less than 0.5; and (ii) a second washing with water recovered mainly from a third washing with pH adjusted with H₂SO₄, acid filtrate from a chlorine dioxide plant or other acid source, to less than 1.0, preferably less than 0.8, wherein said third washing would be performed with industrial water.

In the acidic lignin extraction process comprising displacement washing followed by ion exchange washing, the ion exchange cations are used in the displacement washing of the next batch. In this configuration, only one ion-exchange washing takes place after the displacement washing.

In a preferred embodiment of the invention, after displacement washing and/or ion exchange washing, final washing is still performed, preferably with industrial water.

In one embodiment of the invention, the black liquor is acidified in step (a) to a pH of less than 11.5, preferably to a pH in the range of 2.5 to 11.5.

Step (a) of precipitating lignin by acidifying black liquor can be performed with any acidic source. In one embodiment of the invention, acidification is performed with an acidifier, selected from inorganic acids, organic acids or acid oxides, or with a solution comprising said acidifier.

Non-limiting examples of inorganic acids may be selected from the group consisting of sulfuric acid and hydrochloric acid.

Non-limiting examples of organic acids may be selected from the group consisting of acetic acid and formic acid.

Non-limiting examples of acidic oxides may be selected from the group consisting of CO₂, SO₂ and SO₃.

In a preferred embodiment of the invention, step (a) of precipitating lignin by acidifying black liquor is performed with an acid oxide. In a more preferred embodiment, the acid oxide is CO₂. Such a compound is relatively cheap, thus rendering the process more economical.

Acidification is performed in order to protonate the phenolic groups present in lignin. When protonated, the solubility of these molecules decreases considerably, and precipitates are formed that are filterable/separable.

In this context, step (a) of lignin precipitation by acidification takes place at a pH of less than 11.5 due to the fact that the pKa of the aforementioned phenolic compounds is in the range of 10.0 to 11.0 and it is necessary to reach a pH compatible with these pKa to precipitate lignin. The higher the final extraction pH, the larger the chain size and the smaller the presence of carboxylic groups. There are then two aspects that are impacted by the final pH to be reached: the fraction of lignin to be recovered and the specific consumption of CO₂. Therefore, according to the desired pH, the lignin fraction and the amount of CO₂ change.

There is H₂S emission from tanks containing black liquor from the processes, especially at the pH of the final acidification condition. H₂S, as well as other gases that may be emitted from tanks containing black liquor in the processes of the present invention, are captured and treated appropriately, thus solving the current problem related to the emission of sulfur compounds in lignin extraction processes.

In an optional embodiment of the invention, the lignin extraction processes further comprise black liquor oxidation concurrently with step (a) of precipitation by acidification, to reduce the odor in the process. In the optional oxidation step, H₂S is oxidized to a thiosulfate or a sulfate, thus avoiding problems with H₂S emission, minimizing bad odor in the factory environment.

The current need for environmentally friendly lignin separation processes is solved in the present invention, since in the processes disclosed herein there is a reduction in the generated gases, as well as the treatment of waste gases. Furthermore, the low amount of acid used minimizes the need for disposing of sulfate-containing salts in landfills.

In one embodiment of the invention, before or after step (a) of the lignin extraction processes, cellulose fibers remaining from the black liquor resulting from the kraft process cooking are optionally separated by a separation process selected from: filtration, centrifugation or decantation.

In a preferred embodiment of the invention, the temperature adjustment of step (b) ranges from 60°C to 200°C.

In one embodiment of the invention, the temperature adjusted in step (b) is maintained for any time interval. In a preferred embodiment of the invention, such time interval is greater than 2 minutes. In a more preferred embodiment, the time interval is between 10 minutes and 24 hours.

In one embodiment of the invention, steps (a) and (b) of the processes described herein may be performed concurrently.

The black liquor used in the processes of the present invention can be at any temperature, however it needs to have a temperature of 60°C or above when or after it precipitates, and then undergo cooling, as this temperature variation ensures the size of the granules, improving lignin separation.

In one embodiment of the invention, in step (c) of the lignin extraction processes the black liquor is cooled to a temperature below 50°C.

The purpose of the temperature increase/adjustment followed by cooling is to agglomerate the lignin crystals. It was observed that the lignin crystals need a certain time to agglomerate and form granules, and that this granule formation allows a better separation later.

The temperature variation at the beginning of the processes of the present invention, thus, solves the currently existing problem related to the filtration capacity that requires large separation equipment (and large investments), since the separation is facilitated by granule formation and no further investments are required at this step of the process.

Microscopy images of the granules formed due to temperature variation at the beginning of the processes of the present invention can be seen in figures 03 and 04. In figure 03, the granules are those contained in the first cake, i.e., in the first filtration. Figure 04, by its turn, shows the granules in the resuspension step, granules that are formed due to temperature variation at the beginning of the processes.

Figures 03 (a) and 04 (a) show granules formed at 40°C; figures 03 (b) and 04 (b) show granules formed at 60°C; figures 03 (c) and 04 (c) show granules formed at 70°C; and figures 03 (d) and 04 (d) show granules formed at 80°C.

In one embodiment of the invention, separation step (d) is a solid-liquid type separation. The purpose of this step is to separate the crystals from the liquid remaining in the processes.

In a preferred embodiment, the solid-liquid type separation is performed by means of filters, settlers, decanters, centrifuges, among others. In a more preferred embodiment, separation step (d) is performed by filtration.

In one embodiment of the invention, separation step (d) is performed at a temperature below 50°C, preferably below 40°C.

In one embodiment of the invention, after separation step (d), the solid phase goes to washing step (e) and the liquid phase is directed to evaporation.

In another embodiment of the invention, the lignin extraction processes comprise, after separation step (d), a pH fractionation. Said fractionation can be performed whenever the liquid phase of step (d) - filtered, in the case where the separation is made by filtration - is directed to step (a) and precipitated again at a lower pH.

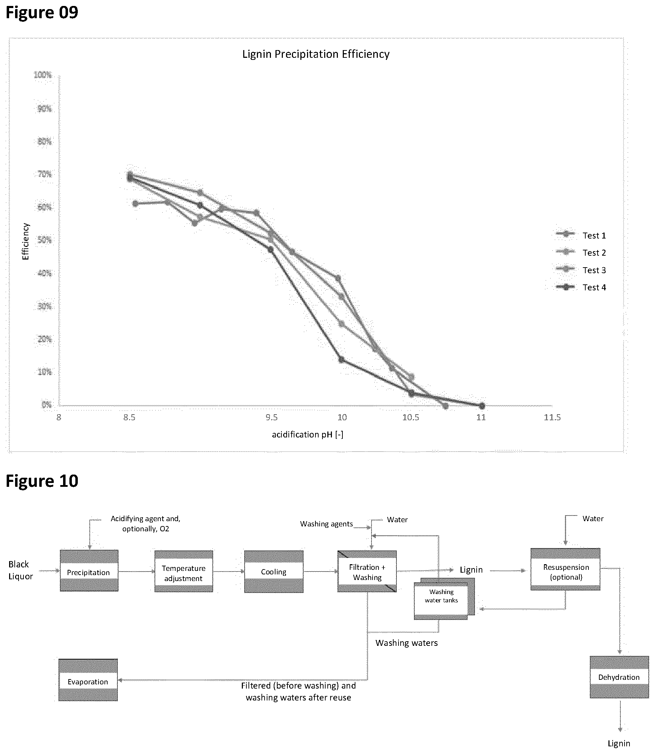

The pH fractionation aims to separate different lignin fractions through a fractional decrease in pH. Figure 09 is a graph illustrating lignin precipitation as a function of pH. The four curves contained in the graph represent different tests performed, which prove the reproducibility of the results. Through this graph, it is possible to notice that the lower the acidification pH of the lignin fraction, the higher the precipitation efficiency.

In addition, pH fractionation provides lignin fractions with different specifications for different desired applications. For example, the greater the amount of phenolic hydroxyls and the lower the molecular weight, the better the antioxidant power of lignin (i.e., the lower the EC50 value); the lower the molecular weight, the better the lignin as additive for melt flow of thermoplastics, which is measured by the melt flow index. Therefore, fractionation has as advantage - in addition to obtaining a greater amount of lignin recovered from the black liquor - the flexible fractionation according to the needs of the final application.

Table 01 below illustrates specifications of lignin fractions obtained with pH fractionation. Molecular weight, OH indices and ash content are commonly measured data for lignin specifications.

**Table 01**

| **pH precipitation** | **cake pH** | **Mw (Da)** | **PD** | **phenolic OH (mmol /g)** | **acid OH (mmol/g)** | **aliphatic OH (mmol/g)** | **S/G** | **EC50 (mg/L)** | **Tg (°C)** | **Soluble (%)** | **Insoluble (%)** | **Ashes (%)** | **Sugars (%)** |
|---|---|---|---|---|---|---|---|---|---|---|---|---|---|
| 8.02 | 3.91 | 2515 | 1.91 | 4.39 | 0.41 | 1.41 | 2.42 | 222.0 | 129 | 8.4 | 87.4 | 2.7 | 0.93 |
| 8.53 | 4.75 | | 1.90 | 4.16 | 0.39 | 1.36 | 2.59 | | 134 | 4.4 | 84.8 | 4.4 | 0.90 |
| 9.08 | 5.12 | 2685 | 1.98 | 4.27 | 0.38 | 1.41 | 2.38 | 230.0 | 136 | 7.4 | 85.2 | 2.1 | 1.13 |
| 9.46 | 6.42 | | 1.94 | 3.95 | 0.38 | 1.37 | 2.48 | | 142 | 5.1 | 87.6 | 1.7 | 0.74 |
| 10.00 | 7.59 | 3677 | 2.29 | 3.18 | 0.32 | 1.41 | 2.11 | 270.0 | 161 | 6.8 | 87.4 | 4.2 | 0.93 |

| | | | | | | | | | | | | | |
|---|---|---|---|---|---|---|---|---|---|---|---|---|---|
| Mw = molecular weight; PD = polydispersity; S/G = syringyl/guaiacyl ratio; EC50 = antioxidant power; Tg = glass transition temperature | | | | | | | | | | | | | |

When the processes of the present invention are performed in batches, each batch can be adjusted according to the lignin fraction of interest. Thus, batch processes allow for greater flexibility and homogeneity when pH fractionation is desired.

In one embodiment of the invention, the washing performed in step (e) can be countercurrent or in suspension with industrial water of the solid phase obtained in step (d). In a preferred embodiment, the washing performed in step (e) is countercurrent to the solid phase obtained in step (d). Therefore, when the separation is performed by means of filtration, the cake is washed in countercurrent (product retained in the filtration) obtained in step (d).

In one embodiment of the invention, the lignin extraction processes further comprise step (f) of resuspending the solid phase. In a preferred embodiment of the invention, step (f) is performed in water with subsequent addition of acid or in an acidic solution, with pH adjustment to a value lower than 3.5. The water used in the resuspension is directed to the final washing of the first cake obtained from the first filtration.

In the resuspension step, the washed solid phase - or cake, if separation by filtration takes place - is placed in a disperser, where a small amount of water is added.

For processes that have undergone ion exchange washing, especially for those where washing has occurred partially (or not completely), later, in another tank, acid is added until the pH reaches a value between 2 and 3. The acid added can be any acid, preferably sulfuric acid.

In this acidification stage of the resuspension step, a small amount of gases evolve. These gases are captured, treated and directed to a boiler for burning.

It is imperative that there is at least one wash before the resuspension step.

In one embodiment of the invention, resuspension step (f) further comprises filtering and, optionally, washing with industrial water.

The resuspension step is performed in order to carry out the ion exchange and more effectively separate the lignin from the solution, however it is not essential in the processes disclosed herein. Adjusting the temperature at the beginning of the processes promotes better separation and greater ease of washing, allowing a well-washed product to be obtained, without the need for resuspension to result in a cleaner product. Therefore, the resuspension step is optional.

In one embodiment of the invention, the lignin extraction processes further comprise a dehydration step after washing step (e) and/or after resuspension step (f). Dehydration can be performed by pressing, dewatering with compressed air and/or drying with a dryer.

In a preferred embodiment of the invention, after washing step (e) the cake is dehydrated by pressing. The maximum pressure in that step is about 1.5 × 10⁶ Pa (15 bar).

Dewatering with compressed air is performed with compressed air between 0.6 × 10⁶ Pa (6 bar) and 3.0 × 10⁵ Pa (3 bar).

The gases emitted from tanks containing black liquor and the waste gases emitted from the first acid washing of the processes are captured, treated and reused in the processes.

The gases are washed in an absorption tower with a soda solution, with a pH greater than 10, and/or burned in a boiler and reused in the processes as energy and/or as chemicals for the processes.

The water used in the countercurrent washes of the lignin extraction processes of the present invention are reused in the processes themselves. Countercurrent washing waters can be reused, for example, in the previous washing or in the optional resuspension step. After reuse, the washing waters proceed to evaporation or effluent treatment.

Lastly, dry lignin obtained from the processes of the present invention can be packaged.

In a preferred embodiment of the invention, the processes for extracting lignin from black liquor comprise the steps of:
A) precipitating lignin by acidifying black liquor with CO₂ up to a pH range between 2.5 and 11.5 and, optionally, concurrent oxidation of the black liquor;
B) adjusting the temperature to above 60°C, preferably at a temperature ranging from 60°C to 200°C;
C) cooling to a temperature below 50°C;
D) separation, preferably filtration;
E) displacement washing and/or ion exchange washing and, optionally, final washing;
F) optionally, resuspending the solid phase in water with subsequent addition of acid or in an acidic solution, followed by filtration and, optionally, washing with industrial water; and
G) dehydration by pressing, dewatering with compressed air and/or drying with a dryer.

A simplified schematic of a lignin extraction process according to this preferred embodiment of the present invention can be seen in figure 10.

As can be seen, the present invention overcomes the disadvantages and inconveniences of the state of the art. It is noteworthy that the examples below, as well as the figures presented should not be considered as limiting the present invention, since a person skilled in the art is fully capable of recognizing that modifications can be made within the scope of the invention.

### EXAMPLES

The examples presented herein are non-exhaustive, intended only to illustrate the invention and should not be used as a basis for limiting it.

### Example 1

In this example a process for extracting acidic lignin from black liquor according to the present invention is described, in which displacement washing and ion exchange washing occurred, and the optional resuspension step was not performed. Said process comprises the following steps:
a) acidification of black liquor with CO₂ up to pH 8.53;
b) adjusting the temperature to 77°C and maintaining this temperature for 30 minutes;
c) cooling to a temperature of about 38°C;
d) filtering the product obtained in step (c) in a filter press and obtaining the first lignin cake;
e) countercurrent washing in the filter of cake obtained in step (d) (product retained from filtration), by means of the following washing sequence:
   - washing with the water recovered from the second wash with sodium sulfate solution adjusted to a conductivity of 99 mS/cm;
   - washing with water recovered mainly from the third wash and with pH adjusted to 0.83 with H₂SO₄; and
   - last washing with industrial water;
f) pressing the washed cake obtained in step (e) in the filter press itself up to 6 × 10⁵ Pa (6 bar);
g) dewatering of the cake by displacement with compressed air;
h) drying of the cake in a dryer; and
i) packaging of the lignin dried in the dryer.

The lignin obtained by this process has as main characteristics an ash content of 1% and a pH of 4.63. In addition, in said process there was a specific consumption of H₂SO₄ of 130 kg per ton of lignin.

### Example 2

In this example a process for extracting acidic lignin from black liquor according to the present invention is described, in which displacement washing occurred and the optional resuspension step was performed. Said process comprises the following steps:
a) acidification of black liquor with CO₂ up to pH 8.52;
b) adjusting the temperature to 72.9°C and maintaining this temperature for 30 minutes;
c) cooling to a temperature of 32°C;
d) filtering the product obtained in step (c) in a filter press and obtaining the first lignin cake;
e) countercurrent washing in the filter of cake obtained in step (d), in which the water used in the washing comes from step (g) with conductivity adjustment to 88.6 mS/cm with sodium sulfate;
f) resuspending the cake obtained in step (e) in countercurrent water from the washing of step (h) and acid with pH adjustment to 2.5;
g) filtering the cake and directing the filtrate to be used as washing water in step (e);
h) washing with industrial water at neutral pH, without pH adjustment, and directing the washing water filtrate to the cake dilution in step (f); and
i) drying the cake in a dryer.

The lignin obtained by this process has as main characteristics an ash content of 1.1% and a pH of 2.5. In addition, in said process there was a specific consumption of H₂SO₄ of 67 kg per ton of lignin.

### Example 3

In this example, a process for extracting acidic lignin from the black liquor according to the present invention is described, in which ion exchange washing occurred and the optional resuspension step was not performed. Said process comprises the following steps:
a) acidification of black liquor with CO₂ up to pH 8.48;
b) adjusting the temperature to between 74.6°C and maintaining this temperature for 30 minutes;
c) cooling to a temperature of 40.3°C;
d) filtering the product obtained in step (c) in a filter press and obtaining the first lignin cake;
e) countercurrent washing in the filter of cake obtained in step (d) (product retained from filtration), by means of the following washing sequence:
   - washing with water recovered from the second wash with pH adjusted to 0.45 with H₂SO₄;
   - washing with water recovered mainly from the third wash and with pH adjusted to 0.82 with H₂SO₄; and
   - last washing with industrial water;
f) pressing the washed cake obtained in step (e) in the filter press itself up to 6 × 10⁵ Pa (6 bar);
g) dewatering of the cake by displacement with compressed air;
h) drying of the cake in a dryer; and
i) packaging of the lignin dried in the dryer.

The lignin obtained by this process has as main characteristics an ash content of 0.39% and a pH of 3.44.

### Example 4

In this example a process for extracting alkaline lignin from the black liquor according to the present invention is described, in which displacement washing occurred and the optional resuspension step was not performed. Said process comprises the following steps:
a) acidification of black liquor with CO₂ up to pH 9.52;
b) adjusting the temperature to 74°C and maintaining this temperature for 30 minutes;
c) cooling to a temperature of 37.7°C;
d) filtering the product obtained in step (c) in a filter press and obtaining the first lignin cake;
e) countercurrent washing in the filter of cake obtained in step (d) (product retained from filtration), by means of the following washing sequence:
   - washing with the water recovered from the second wash with sodium sulfate solution adjusted to a conductivity of 49.0 mS/cm;
   - washing with the water recovered from the third wash with sodium sulfate solution adjusted to a conductivity of 28.5 mS/cm; and
   - last washing with industrial water;
f) pressing the washed cake obtained in step (e) in the filter press itself up to 6 × 10⁵ Pa (8 bar);
g) dewatering of the cake by displacement with compressed air; and
h) drying the cake in a dryer.

The lignin obtained by this process has as main characteristics an ash content of 2.63% and a pH of 9.15.

## Claims

1. A process for extracting lignin from black liquor, **characterized in that** it comprises the steps of:
a) precipitating lignin by acidifying black liquor;
b) adjusting the temperature to above 60°C;
c) cooling;
d) separation; and
e) displacement washing and ion exchange washing.

2. The process according to claim 1, **characterized in that:**
(i) displacement washing is performed with a salt solution; and
(ii) ion exchange washing is performed with water with addition of acid.

3. The process according to claim 2, **characterized in that** the salt solution comprises any salts, preferably sodium salts.

4. The process according to claim 2 or 3, **characterized in that** the salt solution has a conductivity greater than 30 mS/cm, preferably greater than 80 mS/cm.

5. The process according to any one of claims 1 to 4, **characterized in that** the acid added to the water in the ion-exchange washing is sulfuric acid.

6. A process for extracting lignin from black liquor, **characterized in that** it comprises the steps of:
a) precipitating lignin by acidifying black liquor;
b) adjusting the temperature to above 60°C;
c) cooling;
d) separation; and
e) ion exchange washing.

7. The process according to claim 6, **characterized in that** the ion exchange washing is performed with water with addition of acid.

8. The process according to claim 6 or 7, **characterized in that** the acid added to the water in the ion exchange washing is sulfuric acid.

9. A process for extracting lignin from black liquor, **characterized in that** it comprises the steps of:
a) precipitating lignin by acidifying black liquor;
b) adjusting the temperature to above 60°C;
c) cooling;
d) separation; and
e) displacement washing.

10. The process according to claim 9, **characterized in that** the displacement washing is performed with a salt solution.

11. The process according to claim 10, **characterized in that** the salt solution comprises any salts, preferably sodium salts.

12. The process according to any one of claims 9 to 11, **characterized in that** the salt solution has a conductivity greater than 30 mS/cm, preferably greater than 80 mS/cm.

13. The process according to any one of claims 1 to 12, **characterized in that** after displacement washing and/or ion exchange washing, final washing is performed.

14. The process according to claim 13, **characterized in that** the final washing is performed with industrial water.

15. The process according to any one of claims 1 to 14, **characterized in that** the black liquor is acidified in step (a) to a pH of less than 11.5.

16. The process according to claim 15, **characterized in that** the black liquor is acidified in step (a) to a pH in the range of 2.5 to 11.5.

17. The process according to any one of claims 1 to 16, **characterized in that** step (a) of precipitation by acidifying black liquor is performed with an acidifier selected from inorganic acids, organic acids or acid oxides, or with a solution comprising said acidifier.

18. The process according to claim 17, **characterized in that** the acidifier is acid oxide, preferably, CO₂.

19. The process according to any one of claims 1 to 18, **characterized in that** it further comprises the oxidation of black liquor concurrently with step (a).

20. The process according to any one of claims 1 to 19, **characterized in that** the temperature adjustment of step (b) ranges from 60°C to 200°C.

21. The process according to any one of claims 1 to 20, **characterized in that** the temperature adjusted in step (b) is maintained for a time interval longer than 2 minutes.

22. The process according to claim 21, **characterized in that** the time interval is between 10 minutes and 24 hours.

23. The process according to any one of claims 1 to 22, **characterized in that** steps (a) and (b) are performed concurrently.

24. The process according to any one of claims 1 to 23, **characterized in that** in step (c) the black liquor is cooled to a temperature below 50°C.

25. The process according to any one of claims 1 to 24, **characterized in that** separation step (d) is a solid-liquid type separation.

26. The process according to claim 25, **characterized in that** the solid-liquid type separation is performed by means of filters, settlers, decanters or centrifuges.

27. The process according to claim 25 or 26, **characterized in that** step (d) is performed by filtration.

28. The process according to any one of claims 1 to 27, **characterized in that** step (d) is performed at a temperature below 50°C, preferably below 40°C.

29. The process according to any one of claims 1 to 28, **characterized in that** after step (d) the solid phase goes to washing step (e) and the liquid phase is conducted to evaporation.

30. The process according to any one of claims 1 to 28, **characterized in that** after step (d) a pH fractionation takes place.

31. The process according to any one of claims 1 to 30, **characterized in that** the washing performed in step (e) is in suspension or countercurrent to the solid phase obtained in step (d).

32. The process according to claim 31, **characterized in that** the washing performed in step (e) is countercurrent to the solid phase obtained in step (d).

33. The process according to any one of claims 1 to 32, **characterized in that** it further comprises step (f) of resuspending the solid phase.

34. The process according to claim 33, **characterized in that** step (f) is performed in water with subsequent addition of acid or in acidic solution.

35. The process according to claim 33 or 34, **characterized in that** it further comprises filtration and, optionally, washing with industrial water.

36. The process according to any one of claims 1 to 35, **characterized in that** it further comprises the dehydration step after washing step (e) and/or resuspension step (f).

37. The process according to claim 36, **characterized in that** dehydration is performed by pressing, dewatering with compressed air and/or drying with a dryer.

38. The process according to any one of claims 1 to 37, **characterized in that** the gases emitted from the tanks containing black liquor from the process are captured, treated and reused in the process.

39. The process according to any one of claims 1 to 8 or 13 to 38, **characterized in that** the gases emitted from the first acid washing are captured, treated and reused in the process.

40. The process according to claim 38 or 39, **characterized in that** the treated gases are reused in the process as energy and/or as chemical for the process.

41. The process according to any one of claims 1 to 40, **characterized in that** the process takes place in batches.

42. The process according to any one of claims 31 to 41, **characterized in that** the water used in countercurrent washings is reused in the process.

43. Invention of product, process, system or use, **characterized in that** it comprises one or more of the elements described in the present patent application.
